# EUROPÄISCHE PATENTSCHRIFT

(11) **EP 1 588 994 B1**
(45) Veröffentlichungstag und Bekanntmachung des Hinweises auf die Patenterteilung: **24.10.2007**
(21) Anmeldenummer: 04009091.2
(22) Anmeldetag: 16.04.2004
(51) Int. Cl.: C04B 35/536, C09K 5/06, F28D 20/02

(54) **Verfahren zur Herstellung von Formkörpern aus expandiertem Graphit**
Method for the production of shaped bodies of expanded graphite
Procédé pour la fabrication des corps en graphit expansé

(43) Veröffentlichungstag der Anmeldung: 26.10.2005
(73) Patentinhaber: SGL Carbon AG, 65203 Wiesbaden (DE)
(72) Erfinder: Guckert, Werner, 86674 Barr/Schwaben (DE); Kienberger, Wolfgang, 86672 Thierhaupten (DE)

(56) Entgegenhaltungen:
- US-A- 3 404 061
- US-A1- 2002 166 658
- PATENT ABSTRACTS OF JAPAN Bd. 2000, Nr. 06, 22. September 2000 (2000-09-22) -& JP 2000 091453 A (ISHINO CORPORATION:KK), 31. März 2000 (2000-03-31)

## Beschreibung

Die vorliegende Erfindung betrifft ein Verfahren zum Herstellen von Formkörpern aus expandiertem Graphit, insbesondere von Formkörpern mit einer Dicke von mindestens 50 mm, die nach diesem Verfahren hergestellten Formkörper und ihre Verwendung.

In den Patentanmeldungen DE 41 17 077 A, DE 41 17 074 A und DE 40 167 10 wurde vorgeschlagen, dreidimensionale Formkörper direkt aus pulverförmigem Blähgraphit herzustellen, indem entweder
- blähfähiger Graphit in einem Wirbelbett oder bereits in der Endform unter moderater Wärmezufuhr unvollständig expandiert und anschließend bei erhöhter Temperatur in der Form die Expansion zu Ende geführt wird, oder
- unter moderater Wärmezufuhr unvollständig expandierter (vorexpandierter) blähfähiger Graphit in einer Form zu einem Vorformling gepresst wird und anschließend in der Form bei höherer Temperatur die Expansion zu Ende geführt wird oder
- eine feuchte Zubereitung von blähfähigem Graphit in einer Form unter Wärmezufuhr expandiert wird.

Die Endstufe der Expansion erfolgt also in jedem Fall in der Endform, und nach Vollendung der Expansion ist keine Kompaktierung vorgesehen. Die Form muss einerseits weitgehend geschlossen sein, damit sich die Geometrie des Graphitkörpers bei der Expansion nicht ändert, andererseits aber das Entweichen von Luft zulassen. Die mit diesem Verfahren erhaltenen Formkörper sollen formstabil sein und eine homogene Dichte aufweisen. In den bevorzugten Varianten der o. g. Verfahren werden dem blähfähigen Graphit verschiedene Zuschlags- und Hilfsstoffe, insbesondere Bindemittel, zugesetzt.

Bei dem über einen Vorexpansionsschritt verlaufenden Verfahren muss mit teilweise expandiertem Graphitpulver hantiert werden. Wegen dessen geringer Schüttdichte (30 bis 100 g/l in den Ausführungsbeispielen der DE 40 167 10 A) und der Sperrigkeit der Partikel ist es schwierig, Formen damit vollständig zu füllen, und die Staubbelastung ist hoch.

Erfindungsgemäß wird vorgeschlagen, dreidimensionale Formkörper aus verdichtetem Graphitexpandat über die Zwischenstufe zweidimensionaler Halbzeuge oder Vorformlinge aus unvollständig verdichtetem expandiertem Graphit herzustellen.

Das erfindungsgemäße Verfahren umfasst die Schritte
- Herstellung zweidimensionaler Halbzeuge aus Graphitexpandat, optional mit weiteren Zusatzstoffen, wobei das Graphitexpandat im Halbzeug nur wenig verdichtet ist
- Übereinanderstapeln der gewünschten Anzahl (mindestens zwei) Halbzeuge bzw. aus einem Halbzeug ausgeschnittener flächiger Vorformlinge,
- Verbinden der Halbzeuge bzw. Vorformlinge durch Einwirkung von Druck zu einem einstückigen Formkörper
- Endformgebung und weitere optionale Nachbearbeitung

Unter "zweidimensionalen Halbzeugen" bzw. "flächigen Vorformlingen" werden im folgenden Gebilde verstanden, deren Dicke wesentlich kleiner ist als ihre Ausdehnung in der Fläche, also flache Platten, Scheiben, Bahnen u.ä. flächige Gebilde. Solche zweidimensionalen Halbzeuge lassen sich einfach in bekannter Weise erzeugen, indem das pulverförmige Ausgangsmaterial zu einem flächigen Gebilde, beispielsweise einem flachen Strang, einer Bahn oder einer Platte verpresst wird.

Nach dem erfindungsgemäßen Verfahren muss der Übergang vom formlosen Pulver hin zum komplexen dreidimensionalem Formkörper nicht in einem Schritt vollzogen werden. Es ist verfahrenstechnisch wesentlich weniger aufwändig, ein formloses Material, beispielsweise ein Pulver oder einen Brei, zunächst in eine einfache Form, beispielsweise die einer flachen Platte zu überführen, als direkt in eine komplizierte dreidimensionale Form. Außerdem entfallen bei dem erfindungsgemäßen Verfahren die im Stand der Technik auftretenden Schwierigkeiten beim Befüllen von Formwerkzeugen mit staubigem Pulver, sperrigen Partikeln oder zähen Massen.

Ein weiterer Vorteil des erfindungsgemäßen Verfahrens besteht darin, dass im Vergleich zum einstufigen Verfahren nach dem Stand der Technik das erfindungsgemäße Verfahren gerade dadurch, dass es mehrere Stufen umfasst, mehr Gelegenheit bietet zur Variation und Optimierung der Produktparameter als das im wesentlichen einstufige Verfahren nach dem Stand der Technik. So können verschiedene im ersten Schritt hergestellte Halbzeuge in vielfältiger Art und Weise kombiniert werden, so dass eine Vielfalt verschiedener Produkte erhältlich ist, z.B. durch Kombination von Halbzeugen unterschiedlicher Dichte oder/und Dicke oder/und Zusammensetzung oder/und Beschichtung.

Weitere Details, Varianten und Vorteile des erfindungsgemäßen Verfahrens, der nach diesem Verfahren erhältlichen Produkte und deren Verwendung gehen aus der nachfolgenden detaillierten Beschreibung und den Figuren hervor.

Die Figuren zeigen:
- Figur 1: Ablaufschema des erfindungsgemäßen Verfahrens
- Figur 2: Ablaufschema des erfindungsgemäßen Verfahrens, wobei das Halbzeug aus Graphitexpandat partiell mit einem Wärme speichernden Material beschichtet sind

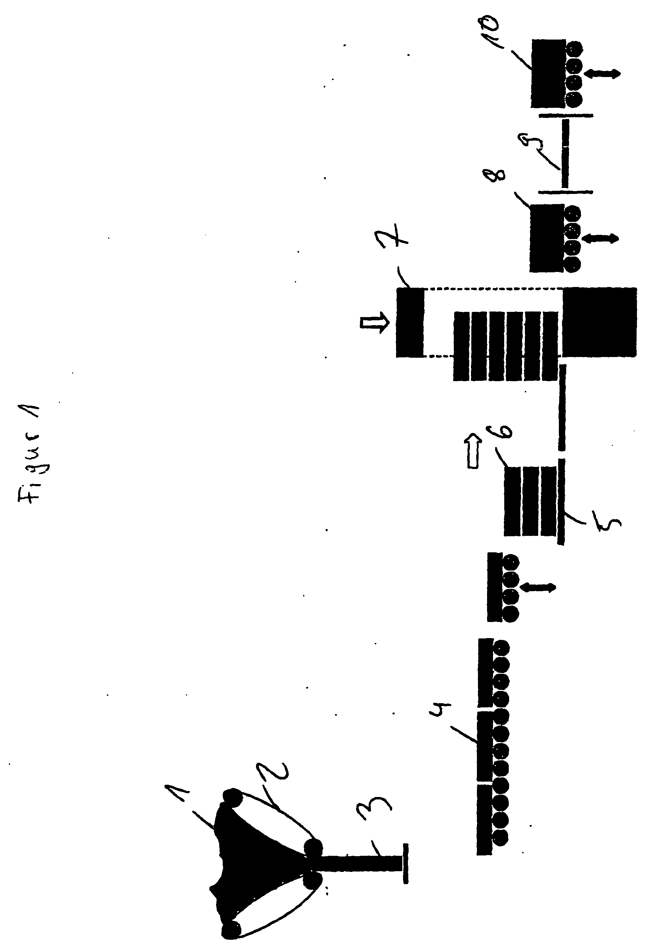

Der Ablauf des erfindungsgemäßen Verfahrens ist in Figur 1 schematisch dargestellt. Ausgangsmaterial des erfindungsgemäßen Verfahrens ist Graphitexpandat 1 (auch als geblähter Graphit bezeichnet). Dem Graphitexpandat können faser- oder partikelförmige Zusatz- oder Füllstoffe aus Metall, Kohlenstoff, keramischen oder mineralischen Materialien zugesetzt werden, beispielsweise Ruß oder andere Formen von Kohlenstoffpartikeln zur Optimierung der thermischen und elektrischen Leitfähigkeit, Fasern, z.B. Kohlenstofffasern oder metallische Fasern, oder/und keramische oder mineralische Partikel, beispielsweise aus Wärme speichernden Substanzen. Die Auswahl dieser Materialien richtet sich nach der beabsichtigten Verwendung der herzustellenden Formkörper, die Erfindung ist nicht an die Verwendung irgendwelcher faser- oder partikelförmiger Zusätze gebunden.

Die Herstellung von expandiertem Graphit (Graphitexpandat, Blähgraphit) ist bekannt u.a. aus der US-A 3 404 061. Für die Herstellung von expandiertem Graphit werden Graphiteinlagerungsverbindungen bzw. Graphitsalze, z.B. Graphithydrogensulfat oder Graphitnitrat, schockartig erhitzt. Dabei vergrößert sich das Volumen der Graphitpartikel um den Faktor 200 bis 400, und die Schüttdichte sinkt auf 2 bis 20 g/l. Das so erhaltene sog. Graphitexpandat besteht aus wurm- oder ziehharmonikaformigen, sperrigen Aggregaten. Werden diese Partikel unter Druck verdichtet, so verhaken und verzahnen sie sich untereinander. Aufgrund dieses Effekts lassen sich ohne Binderzusatz selbsttragende flächige Gebilde, z.B. endlose Bahnen, Folien oder Platten, herstellen. Insbesondere ist die Verdichtung zu Folien mit Dicken von 0,15 bis 3 mm und Dichten von 0,1 bis 2 g/cm³, bevorzugt 0,7 bis 1,8 g/cm³ bekannt. Diese Folien werden beispielsweise als Dichtungswerkstoff benutzt.

In den Halbzeugen für das erfindungsgemäße Verfahren ist das Graphitexpandat jedoch weniger stark verdichtet als in den bekannten Graphitfolien. Es ist entscheidend für das erfindungsgemäße Verfahren, dass das Graphitexpandat im Halbzeug nur soweit komprimiert ist, dass einerseits ein für die Herstellung eines flächigen Halbzeugs ausreichender Zusammenhalt zwischen den Partikeln bewirkt wird, andererseits aber noch die Möglichkeit einer merklichen weiteren Verdichtung besteht. Das Graphitexpandat, dessen Dichte 2 bis 20 g/l, bevorzugt 3 bis 15 g/l, beträgt, wird im Halbzeug auf eine Dichte von 0,01 bis maximal 0,2 g/cm³, bevorzugt auf 0,02 bis 0,1 g/cm³ verdichtet. Wegen dieser relativ geringen Verdichtung ist davon auszugehen, dass die Expandatpartikel noch teilweise wurmfömig sind, so dass sie sich in einem nachfolgenden Kompressionsschritt weiter miteinander verhaken und verzahnen können. Aufgrund der geringeren Verdichtung des Expandats weisen die Halbzeuge rauhe Oberflächen auf im Gegensatz zu den glatten Oberflächen der bekannten Graphitfolien.

Bevorzugt werden die Halbzeuge kontinuierlich durch Pressen zwischen zwei Textilförderbändern 2 in Form langgestreckter endloser Bahnen 3 hergestellt. Aus dem so erhaltenen flächigen Halbzeug werden anschließend Vorformlinge 4 passender Größe ausgeschnitten oder ausgestanzt. Die Größe, d.h. die Flächenausdehnung, sowie die Flächengeometrie der Vorformlinge 4 richten sich im wesentlichen nach dem herzustellenden Produkt, das erfindungsgemäße Verfahren setzt hier keine Grenzen. Aus praktischen Gründen werden als Vorformlinge vorzugsweise quadratische Platten mit einer Fläche von 100 mm x 100 mm bis zu 2000 mm x 2000 mm verwendet. Es können jedoch selbstverständlich auch kreisförmige, rechteckige oder anders geformte Vorformlinge eingesetzt werden.

Natürlich kann aus dem Graphitexpandat auch direkt ein Halbzeug mit den Abmessungen des gewünschten Vorformlings 4, beispielsweise in Form einer Platte bestimmter Fläche und Dicke, gepresst werden. Diese Variante ist jedoch wegen der diskontinuierlichen Arbeitsweise gegenüber der kontinuierlichen Herstellung flacher Stränge oder Bahnen weniger bevorzugt. Geeignete Halbzeuge und daraus hergestellte Vorformlinge für das erfindungsgemäße Verfahren sind zwischen 4 und 45 mm, vorzugsweise zwischen 5 und 40 mm dick. Die Verwendung dünnerer Halbzeuge ist wenig wirtschaftlich, denn je dünner das Halbzeug, desto mehr Vorformlinge aus diesem Halbzeug müssen übereinander gestapelt werden, um einen Formkörper einer bestimmten Größe zu erhalten. Halbzeuge mit einer Dicke von wesentlich mehr als 55 mm sind ebenfalls ungeeignet. Beim anschließenden Zusammenpressen im übereinander gestapelten Zustand würden die aus einem solchen Halbzeug erhaltenen sehr dicken Vorformlinge vorwiegend selbst verformt und in sich selbst verdichtet, und verbinden sich dabei kaum mit den benachbarten Vorformlingen. Es besteht somit die Gefahr, aus einem Stapel lose übereinander liegender dicker Vorformlinge geringer Dichte nur einen Stapel kaum aneinander haftender dünnerer verformter Vorformlinge höherer Dichte zu erhalten anstelle des gewünschten einstückigen Formkörpers. Außerdem führt die starke Verformung dicker Vorformlinge beim Zusammenpressen zum seitlichen Herausbrechen von Material.

Aus diesen flachen Vorformlingen 4 wird das gewünschte dreidimensionale Bauteil aufgebaut, indem die benötigte Anzahl flacher Vorformlinge 4 auf einem Etagensammler 5 übereinander gestapelt wird. Es werden mindestens zwei Vorformlinge übereinander gelegt. Dieser Stapel 6 wird anschließend in einer Presse 7 zusammen gepresst, wobei sich durch die Einwirkung des Drucks die übereinander liegenden Vorformlinge miteinander zu einem einstückigen Rohformkörper 8 verbinden. Beim Zusammenpressen wird die in den Halbzeugen noch vorhandene Kompressionsreserve ausgenutzt, so dass die Dichte auf Werte zwischen 0,025 und 0,4 g/cm³, bevorzugt 0,03 bis 0,25 g/cm³ ansteigt.

Die Dicke (Höhe) des durch Zusammenpressen des Stapels 6 aus übereinander liegenden Vorformlingen 4 erhältlichen Rohformkörpers 8 richtet sich nach der Anzahl und Dicke der übereinander gestapelten Vorformlinge sowie nach dem beim Pressen angewandten Druck. Bei der Anzahl der übereinander zu stapelnden Vorformlinge muss der Volumenschwund durch die Verdichtung zu berücksichtigt werden, d.h. beispielsweise bei einer Verdichtung auf ungefähr die Hälfte des Ausgangsvolumens beim Pressen muss das Volumen des Stapels aus Vorformlingen etwa doppelt so groß sein wie das des gewünschten Endprodukts.

Ein besonderer Vorteil des erfindungsgemäßen Verfahrens ist, dass auch Formkörper mit einer Dicke (in Pressrichtung) von mehr als 50 mm hergestellt werden können.

Die übereinander gestapelten, miteinander zu verbindenden Vorformlinge müssen nicht notwendigerweise identisch sein hinsichtlich Dicke, Dichte und Zusammensetzung. Vielmehr umfasst das erfindungsgemäße Verfahren die Möglichkeit, Vorformlinge verschiedener Dicke, Dichte oder/und Zusammensetzung zu kombinieren entsprechend den gewünschten Eigenschaften des herzustellenden Formkörpers. Auf diese Weise lassen sich beispielsweise Formkörper herstellen mit einer gezielten räumlichen Variation der Zusammensetzung.

Die Oberflächen einzelner oder aller Vorformlinge können partiell mit einer Beschichtung, einem Überzug, einem Belag oder einer Auflage versehen sein. Entscheidend für die Erfindung ist, dass mindestens an 50 % jeder Grenzfläche zwischen zwei Vorfomlingen die Graphitpartikel der beiden Vorformlinge einander berühren und mit-einander in Wechselwirkung treten, d.h. sich untereinander verhaken und verzahnen, können.

Einige der zu verbindenden Vorformlinge können, wenn dies für die beabsichtige Funktion des herzustellenden Formkörpers erforderlich ist, mit einer Imprägnierung versehen werden, beispielsweise mit Furanharz. Dies ist beispielsweise dann sinnvoll, wenn der gewünschte Formkörper Schichten mit geringerer Porosität und demzufolge geringerer Permeabilität aufweisen soll, z.B. als Dampfsperre wirkende Schichten.

Für die Anwendung erfindungsgemäßer Formkörper als Wärmespeicher können einzelne Vorformlinge mit Wärme speichernden Substanzen imprägniert werden, beispielsweise mit latente Wärme speichernden Phasenwechselmaterialien, z.B. mit Paraffinen oder mit wäßrigen Lösungen von Salzen, die Hydrate bilden und so als Phasenwechselmaterialien wirken. Derlei Phasenwechselmaterialien und ihre Wirkung sind dem Fachmann bekannt. Bevorzugt werden durch die Imprägnierung 30 bis 40 % des Porenvolumens des Vorformlings gefiillt.

Für den Pressvorgang ist keine extra Wärmezufuhr notwendig. Die angewendeten Drücke liegen im Bereich von 10 bis 500 bar (1 bis 50 MPa). Für das Zusammenpressen der Vorformlinge können stationäre Plattenpressen 7 benutzt werden. Die beim Verdichten verdrängte Luft kann aus der Plattenpresse seitlich entweichen. Es können aber auch kontinuierlich arbeitende Anlagen mit Walzenpaaren eingesetzt werden, z.B. Kalanderstühle.

Die so erhaltenen Rohformkörper 8 sind haltbar und stabil, und die einzelnen flachen Vorformlinge sind unlösbar miteinander verbunden. Dies lässt sich darauf zurückführen, dass sich während des Zusammenpressens der übereinander gestapelten Vorformlinge die nur wenig verdichteten Expandat-Würmchen aus den benachbarten Vorformlingen über die Grenzflächen zwischen den einzelnen Vorformlingen hinweg miteinander verhaken und verzahnen. Jedoch ist die Erfindung nicht an diese Theorie gebunden. Jedenfalls sind, wenn der Formkörper senkrecht zu den Ebenen der gestapelten Vorformlinge aufgeschnitten wird, an den Schnittflächen die Grenzen zwischen den ursprünglich einzelnen Vorformlingen im fertigen Formkörper nicht mehr sichtbar. Anhand des fertigen Formkörpers ist also nicht mehr erkennbar, aus welcher Anzahl von Vorformlingen es hergestellt wurde.

Erfolgt das Zusammenpressen in einer offenen Plattenpresse, so bilden sich an den Seitenflächen des Rohformkörpers durch die Verdrängung des Materials unter Einwirkung des Pressdrucks Wülste. Diese werden anschließend mittels mechanischer Bearbeitung im Zuschnitt 9 entfernt, und die Rohformkörper 8 werden in die gewünschte Endform gebracht. Es hat sich gezeigt, dass sich die Rohformkörper 8 sehr leicht durch Bearbeitung mit einer Säge oder einem Teppichmesser in die gewünschte Form, beispielsweise in die Form eines Block 10, bringen lassen.

Darüber hinaus können die Formkörper im Prozess der formgebenden Nachbearbeitung beispielsweise mit Aussparungen versehen werden, Nuten und Hinterschneidungen heraus gearbeitet oder Muster in die Oberfläche eingeprägt werden u.ä.

Die Prozesse des Pressens und des Zuschnitts können aber auch in einer kombinierten Anlage vorgenommen werden, beispielsweise in einer Presse mit beweglichen Backen an den Stirnseiten, die nach dem Pressen heruntergefahren werden und so die Randwülste abschneiden.

Auch das endkontumahe Pressen in einem entlüftbaren Formwerkzeug ist möglich, jedoch ist diese Variante wegen des hohen Aufwands für die Werkzeugherstellung weniger bevorzugt.

Verschiedene mit dem erfindungsgemäßen Verfahren erhaltene Formkörper können mittels Klebemitteln miteinander verbunden werden, um Bauteile mit komplizierterer Geometrie zu erhalten. Hierzu sind alle bekannten und allgemein gebräuchlichen Klebemittel geeignet.

In die Oberflächen der Formkörper lassen sich Funktionskomponenten einpressen, beispielsweise Heizungsrohre für Anwendungen in der Heiz- und Klimatechnik.

Weitere, optionale Verfahren der Nachbearbeitung umfassen beispielsweise das Aufbringen von Beschichtungen auf die Oberflächen der Formkörper, z.B. durch Lackieren oder durch Kaschieren mit flächigen Materialien, z.B. Geweben oder anderen textilen Materialien, und das Imprägnieren der Formkörper mit bestimmten Substanzen, je nach beabsichtigter Funktion der Formkörper.

Die Leitfähigkeit der Formkörper für Wärme und elektrischen Strom hängt von der Verdichtung ab. Je höher die Verdichtung, desto höher sind die elektrische und thermische Leitfähigkeit und desto stärker ausgeprägt ist die Anisotropie der Wärme- und elektrischen Leitfähigkeit. Über die Verdichtung ist es daher möglich, die Isotropie/Anisotropie der thermischen und elektrischen Leitfähigkeit zu steuern.

Ein wesentliches Anwendungsgebiet der erfindungsgemäßen Formkörper, insbesondere Blöcke, ist die Klima- und Temperiertechnik. Hier bietet sich zunächst aufgrund der thermischen Leitfähigkeit des Graphits die Anwendung als Wärmeleiter an, beispielsweise als Wärmeableitkörper für elektronische Geräte, oder als Wärmetauscher.

Darüber hinaus lässt sich in den erfindungsgemäßen Formkörpern die Wärmeleitfähigkeit des Graphits mit der Wärmespeicherfähigkeit eines latente oder fühlbare Wärme speichernden Materials koppeln, indem in den erfindungsgemäßen Formkörper ein Wärmespeichermaterial eingebracht wird. Das Graphitgerüst erleichtert durch seine thermische Leitfähigkeit die Wärmezufuhr beim Beladen bzw. die Wärmeabfuhr beim Entladen des Speichers.

Die erfindungsgemäßen Formkörper lassen sich leicht mit Flüssigkeiten imprägnieren bzw. infiltrieren. So können aus den nach dem erfindungsgemäßen Verfahren erhaltenen Formkörpern durch Imprägnierung oder Infiltrierung mit einem in einem Lösungsmittel, bevorzugt Wasser, gelösten Wärmespeicher- oder Phasenwechselmaterial wie Salzhydrat oder mit einem in die flüssige Phase überführbaren Phasenwechselmaterial wie Paraffin Wärmespeicher hergestellt werden. Bevorzugt werden durch die Imprägnierung 30 bis 40 % des Porenvolumens des Formkörpers gefüllt.

Alternativ dazu können, wie bereits beschrieben, einzelne Vorformlinge imprägniert werden und mit nicht imprägnierten Vorformlingen zu einem Formkörper kombiniert werden.

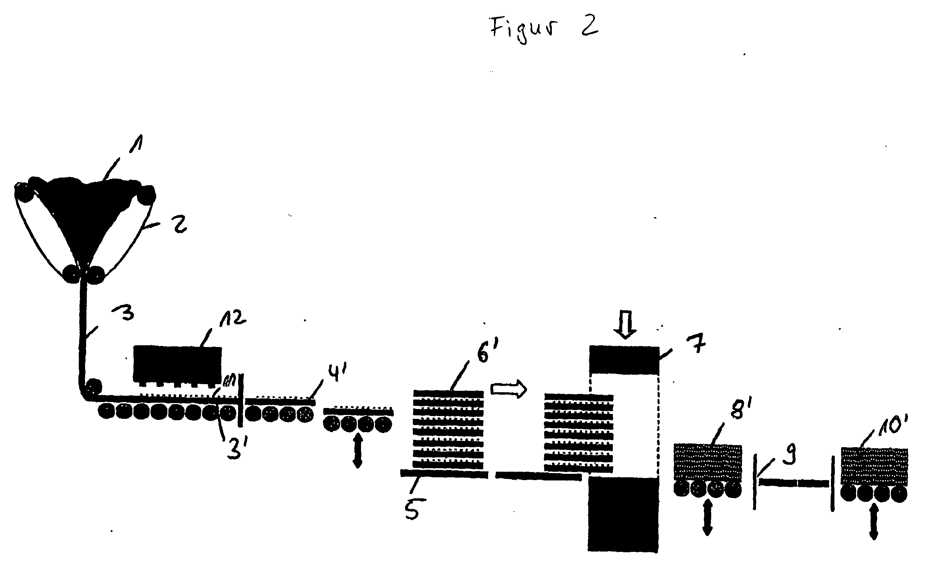

Aber auch in fester Form, also als Pulver oder Granulat, vorliegende Wärmespeichermaterialien lassen sich in die erfindungsgemäßen Blöcke einbringen. Eine dafür geeignete Verfahrensweise ist in Figur 2 dargestellt.

Nach derselben Verfahrensweise wie in Figur 1 wird Graphitexpandat 1 zwischen Textilförderbändern 2 zu einer Bahn 3 verpresst, auf deren nach oben weisender Oberfläche anschließend das pulver- oder granulatförmige Wärmespeichermaterial 11, beispielsweise Magnesit oder Schwerspat, aus einer Dosiervorrichtung 12 flächig zu einer dünnen, losen Schicht verteilt wird. Die Körner bzw. Granulatpartikel haben typischerweise Durchmesser zwischen 0,5 und 5 mm. Aus der bestreuten Bahn 3' werden anschließend im Zuschnitt plattenförmige Vorformlinge 4' ausgeschnitten, die auf einem Etagensammler 5 zu einem Stapel 6' übereinander gestapelt und in einer stationären Presse 7 zusammengepresst werden. Alternativ können auch aus der Bahn 3 zunächst Platten 4 ausgeschnitten werden, deren nach oben weisende Oberflächen dann mit dem Wärmespeichermaterial 11 bestreut werden.

Entscheidend für den Zusammenhalt des Verbundes ist, das die aufgestreute Schicht nicht so dick und kompakt ist, dass sie im Stapel die Oberflächen der aneinander grenzenden Graphitplatten völlig voneinander separiert. Durch die Pulverschüttung hindurch muss noch eine Wechselwirkung zwischen den Plattenoberflächen möglich sein, so dass es beim Pressen zu dem für die gegenseitige Haftung der Platten entscheidenden Verhaken und Verzahnen der Graphitexpandatpartikel untereinander kommt. Die Bedeckung der Oberfläche jedes Vorformlings mit den aufgestreuten Partikeln darf daher 50 % nicht überschreiten. Deshalb wird die Streuung vorzugsweise nicht verteilt über die gesamte Oberfläche des Vorformlings aufgebracht, sondern nur auf bestimmte Bereiche, beispielsweise in vorher in die Oberfläche eingebrachte, in einem geeigneten Muster angeordnete Rillen oder andere Vertiefungen. Diese Rillen oder Vertiefungen können mit einem Schneidwerkzeug aus der Oberfläche herausgeschnitten oder mit einem stempelartigen Werkzeug eingepresst werden.

Beim Zusammenpressen des Stapels 6' werden die aufgestreuten Partikel von der Plattenoberfläche in die oberflächennahen Bereiche der Platten hinein gedrückt, so dass im Querschnitt des Körpers keine scharf getrennten diskreten Schichten aus Graphit bzw. aus dem aufgeschütteten Pulver erkennbar sind.

Die Trennung zwischen Graphitschichten und Wärmespeichermaterial enthaltenden Schichten lässt sich weiter herabsetzen, wenn möglichst dünne Vorformlinge verwendet werden, denn je dünner die Vorformlinge, desto dünner die Graphitschichten zwischen den das Wärmespeichermaterial enthaltenden Schichten. Bevorzugt werden für die Herstellung von Blöcken mit ärme speichernden Zwischenschichten Vorformlinge mit einer Dicke von 10 bis 20 mm verwendet. So lässt sich aus heterogenen Halbzeugen mit diskretem Schichtaufbau (Graphit-Vorformling mit aufgestreutem Pulver bzw. Granulat) ein weniger heterogenes Produkt mit Übergangsbereichen zwischen den einzelnen Schichten erhalten.

Die so erhaltenen, mit dem Wärmespeichermaterial beladenen Rohformkörper 8' werden anschließend ebenso wie die Formkörper 8 im Zuschnitt 9 in die gewünschte Form, beispielsweise eines Blockes 10' gebracht.

Es ist klar, dass das Verfahren nach Figur 2 nicht auf die Herstellung Wärme speichernder Zwischenschichten beschränkt ist. Es können auch Formkörper mit anderen Funktionsschichten hergestellt werden, indem auf die nach oben weisende Oberfläche des Halbzeugs bzw. der Vorformlinge Partikel eines entsprechenden Funktionsmaterials aufgebracht werden. Entscheidend für die Herstellung des erfindungsgemäßen Formkörpers Ist, dass die nach oben weisende Oberfläche jedes Vorformlings maximal zu 50 % von den Partikeln des Funktionsmaterials bedeckt ist.

Weitere Varianten des erfindungsgemäßen Verfahrens bestehen darin, in den Stapeln 6 bzw. 6' zwischen den einzelnen Vorformlingen 4 bzw. 4' Lagen aus Lochblech, gelochter Folie, offenem Gewebe, Gewirk oder anderen, weitmaschigen flächigen textilen Gebilden einzulegen. Geeignet sind beispielsweise Gewebe mit Maschenweiten zwischen 3 mm x 3 mm und 20 mm x 20 mm. Zwischen den Graphitschichten eingebrachte Gewebelagen bewirken eine Verbesserung der mechanischen Stabilität, insbesondere der Biegefestigkeit, der Formkörper.

Entscheidend ist, dass die Zwischenlagen die Oberflächen der Vorformlinge nicht vollständig bedecken, damit noch eine Wechselwirkung zwischen den Plattenoberflächen möglich ist, so dass sich beim Pressen die Graphitexpandatpartikel über die Plattengrenzen hinweg untereinander verhaken und verzahnen. Der Bedeckungsgrad jeder Grenzfläche zwischen den Vorformlingen durch eine Auflage oder sonstige Arten von Beschichtungen oder Belägen sollte daher 50 % der Gesamtoberfläche nicht überschreiten.

Sofern die zwischen den Vorformlingen eingebrachten Substanzen schmelzbar oder thermoplatisch sind (z.B. gelochte Kunststofffolie) oder schmelzbare oder thermoplatische Bestandteile, z.B. Kunststofffasern, enthalten, kann der Pressvorgang bei erhöhter Temperatur vorgenommen werden, um ein Erweichen, An- oder Aufschmelzen dieser Substanzen zu erzielen. Erfindungsgemäß ist dies jedoch nicht erforderlich, um die Haftung zwischen den Plattenoberflächen zu bewirken. Durch das Aufschmelzen kann aber eine Infiltrierung der oberflächennahen Schichten der Vorformlinge mit der geschmolzenen Substanz erzielt werden, so dass der erhaltene Formkörper kontinuierliche Übergänge zwischen den Graphitschichten und den Zwischenschichten aufweist.

Abschließend sei noch einmal hervorgehoben, dass Imprägnierung, Infiltrierung und Einbringung von Zwischenschichten nur dazu dienen, den erfindungsgemäßen Formkörpern bestimmte, für ihre Verwendung nötige Funktionen, z.B. Wärmespeicherung, zu verleihen. Die als Zwischenschichten oder durch Imprägnierung eingebrachten Materialien müssen keine Kleber-, Binder- oder Haftungsfunktion erfüllen, denn in den erfindungsgemäßen Formkörpern haften die Vorformlinge ohne Binder oder Kleber aneinander aufgrund der durch das Zusammenpressen erzielten Effekte des gegenseitigen Verhakens und Verzahnens der Graphitexpandatpartikel über die Grenzflächen der Vorformlinge hinweg.

### Ausführungsbeispiele

In den Ausführungsbeispielen des erfindungsgemäßen Verfahrens werden plattenförmige Vorformlinge übereinander gestapelt, in einer Plattenpresse zu einem Rohformkörper zusammengepresst, der zu einem Block zugeschnitten wird. Unter Block wird hier ein würfel- oder quaderförmiger Körper verstanden. Die Vorformlinge wurden aus Graphitexpandat mit einer Dichte von 3 g/l hergestellt. Falls nicht anders angegeben, erfolgte der Pressvorgang bei Raumtemperatur. Mit "Dicke" der Vorformlinge bzw. "Dicke/Höhe" der Blöcke ist immer die Dimension in Pressrichtung gemeint.

### Beispiele 1 bis 4: Herstellung von Blöcken mit 50 mm Dicke

Ein Block (Beispiel 1) mit einer Höhe (Dicke) von 50 mm und einer Dichte von 0,15 g/cm³ wurde hergestellt, indem 8 plattenförmige Vorformlinge mit einer Dicke von je 20 mm, einer Dichte von je 0,025 g/cm³ und einer Fläche von 500 mm * 250 mm übereinander gestapelt und bei einem Druck von 200 bar (20 MPa) zusammengepresst wurden. Anschließend wurden von dem Rohformling die wulstigen Seitenflächen abgeschnitten. Dadurch verringerten sich die Länge und Breite der Blockgrundfläche gegenüber der Fläche der Halbzeuge um jeweils 20 mm. Der Block wurde in Pressrichtung aufgeschnitten, die Schnittflächen waren homogen, die ursprünglichen Grenzflächen zwischen den Vorformlingen waren nicht mehr zu erkennen.

In den folgenden Beispielen 2 bis 4 wurden aus plattenförmigen Halbzeugen mit einer Fläche von 400 mm x 600 mm jeweils Blöcke mit einer Höhe (Dicke) von 50 mm gefertigt. Für die Fertigung der Blöcke wurden jeweils mehrere Halbzeuge gleicher Dicke und Dichte übereinander gestapelt und zusammengepresst. Anschließend wurden von dem Rohformling die wulstigen Seitenflächen abgeschnitten. Dadurch verringerten sich die Länge und Breite der Blockgrundfläche gegenüber der Fläche der Halbzeuge um jeweils 20 mm.

In Tabelle 1 sind die Dicke und Dichte der nach dem erfindungsgemäßen Verfahren erhaltenen Blöcke angegeben in Abhängigkeit von der Anzahl der übereinander gestapelten Halbzeuge, ihre Dicke und Dichte.

**Tabelle 1**

| Nr. | Anzahl der plattenförmigen Vorformlinge | Dicke der Plattenförmigen Vorformlinge/ | Dichte desGraphits in den plattenförmigen Vorformlingen/ | Dicke (=Höhe) des Blocks / | Dichte des Graphits im Block / |
|---|---|---|---|---|---|
| | | mm | g/cm³ | mm | g/cm³ |
| 2 | 2 | 35 | 0,055 | 50 | 0,084 |
| 3 | 5 | 35 | 0,055 | 50 | 0,220 |
| 4 | 4 | 35 | 0,027 | 50 | 0,095 |

Aus Tabelle 1 geht hervor, dass die Materialdichte im Block von der Anzahl der Halbzeuge und deren Dichte abhängt. So ist es durch entsprechende Auswahl der Halbzeuge möglich, gezielt bestimmte Dichten zu erreichen. Dies ist interessant für die Einstellung bestimmter Werte und Anisotropien der Wärmeleitfähigkeit, da diese von der Verdichtung abhängen.

Der Vergleich der Blöcke Nr. 2 und 3 zeigt, dass bei gleicher Blockdicke, sowie gleicher Dichte und Dicke der Halbzeuge die Dichte des Graphit im Block um so größer ist, ja mehr Halbzeuge übereinander gestapelt und zusammengepresst wurden.

### Beispiel 5: Blöcke mit Wärme speichernden Zwischenschichten

Nach dem erfindungsgemäßen Verfahren wurde ein Block hergestellt aus vier übereinander gestapelten Platten mit einer Fläche von je 300 mm x 300 mm, einer Dicke von je 40 mm und einer Dichte von je 0,02 g/cm³. Die nach oben weisenden Oberflächen von drei der vier Platten wurden mit je 100 g körnigem Schwerspat (Korndurchmesser ca. 1 mm) so bestreut, dass eine lockere flächige Verteilung der Körner auf der Plattenoberfläche erhalten wurde, die Oberfläche also nicht vollständig bedeckt war. Schwerspat dient als Speichermaterial für fühlbare Wärme.

Anschließend wurden die drei bestreuten Platten übereinander gestapelt, die vierte, unbestreute Platte zuoberst auf den Stapel gelegt, und der Stapel wurde unter einem Druck von 150 bar (15 MPa) bei Raumtemperatur auf eine Höhe von 40 mm zusammen gepresst.

Der so erhaltene Block enthält drei Wärme speichernde Zwischenschichten, wobei der Übergang zu den jeweils benachbarten Graphitschichten kontinuierlich ist, da die Körner des Wärmespeichermaterials beim Zusammenpressen in die Plattenoberflächen hinein gedrückt werden. Die hohe Wärmeleitfähigkeit der Graphitschichten zwischen den Wärme speichernden Schichten erlaubt eine schnelle Aufheizung bzw. Abkühlung des Wärmespeichers.

### Beispiel 6: Blöcke mit Verstärkungseinlagen zwischen den Halbzeugen

Nach dem erfindungsgemäßen Verfahren wurde ein Block hergestellt aus fünf übereinander gestapelten Platten mit einer Fläche von je 200 mm x 200 mm, einer Dicke von je 40 mm und einer Dichte von je 0,02 g/cm³. Beim Übereinanderstapeln wurden jeweils zwischen die Platten Lagen aus einem Gewebe aus schmelzbaren Kunststofffasern mit einer Maschenweite von 3 mm x 3 mm eingelegt, so dass ein Stapel mit alternierender Anordnung von Graphitplatten und Gewebelagen erhalten wurde. Das Zusammenpressen zu einem Block mit einer Dicke von 40 mm erfolgte bei einer Temperatur von 180 °C mit einem Druck von 200 bar (20 MPa).

### Beispiel 7: Abhängigkeit des Betrags und der Anisotropie der thermischen und der elektrischen Leitfähigkeit der Halbzeuge von der Dichte

Durch den Vergleich verschiedener Vorformlinge (Tabelle 2) wird deutlich, dass sowohl der Betrag als auch die Anisotropie der thermischen und der elektrischen Leitfähigkeit der Halbzeuge von der Dichte abhängt. Je höher die Verdichtung, desto flacher und ebener sind die Graphitpartikel und desto paralleler orientieren sie sich zur Plattenebene. Daher steigt mit zunehmender Dichte das Verhältnis der Leitfähigkeit in der Plattenebene zur Leitfähigkeit quer zur Plattenebene.

### Beispiele 8 und 9: Abhängigkeit des Betrags und der Anisotropie der thermischen und der elektrischen Leitfähigkeit der Blöcke von der Materialdichte

Die bereits im vorigen Beispiel anhand von Halbzeugen verschiedener Dichte nachgewiesene Abhängigkeit von Betrag und Anisotropie der elektrischen und thermischen Leitfähigkeit von der Verdichtung des Graphits ist auch bei den nach dem erfindungsgemäßen Verfahren hergestellten Blöcken zu beobachten. Dies zeigt der Vergleich zweier Blöcke unterschiedlicher Dichte in Tabelle 3. Jeder Block wurde nach dem erfindungsgemäßen Verfahren aus übereinander gestapelten Halbzeugen gleicher Dichte und Dicke hergestellt.

**Tabelle 2**

| Halbzeug Nr. | 1 | 2 | 3 | 4 | 5 |
|---|---|---|---|---|---|
| Dicke/mm | 6 | 30 | 25 | 20 | 10 |
| Dichte/ g/cm³ | 0,02 | 0,03 | 0,04 | 0,06 | 0,13 |
| Wärmeleitfähigkeit/ W/mK | | | | | |
| • in x-Richtung | | 4,2 | 6,1 | 6,8 | 9,9 |
| • in y-Richtung | | 3,5 | 4,1 | 5,8 | 11,1 |
| • in z-Richtung | | 3,0 | 3,2 | 3,6 | 5,1 |
| Elektrischer Widerstand/ Ohm*µm | | | | | |
| • in x-Richtung | 843 | 475 | 405 | 268 | 148 |
| • in z-Richtung | 957 | 640 | 480 | 500 | 233 |

**Tabelle 3**

| Block Nr | 8 | 9 |
|---|---|---|
| Blockdicke (= Höhe) / mm | 140 | 43 |
| Dichte des Graphits im Block/ g/cm³ | 0,03 | 0,14 |
| Anzahl der Halbzeuge | 5 | 2 |
| Dicke je Halbzeug/ mm | 40 | 40 |
| Dichte des Graphits in den Halbzeugen/g/cm³ | 0,02 | 0,024 |
| Wärmeleitfähigkeit / W/mK | | |
| • in x-Richtung | 3,3 | 12,6 |
| • in y-Richtung | 3,0 | 15,5 |
| • in z-Richtung | 2,4 | 4,2 |
| Elektrischer Widerstand / Ohm*µm | | |
| • in x-Richtung | 500 | 105 |
| • in z-Richtung | 575 | 340 |

## Patentansprüche

1. Verfahren zur Herstellung von Formkörpern aus verdichtetem Graphitexpandat, umfassend die Schritte
• Herstellung flächiger Vorformlinge mit einer Dichte von 0,01 g/cm³ bis 0,2 g/cm³ aus Graphitexpandat mit einer Dichte von 2 g/l bis 20 g/l
• Übereinanderstapeln von mindestens zwei Vorformlingen
• Verbinden der Vorformlinge durch Einwirkung von Druck zu einem einstückigen Formkörper, wobei der Graphit unter Einwirkung des Drucks auf eine Dichte von 0,025 g/cm³ bis 0,4 g/cm³ verdichtet wird.

2. Verfahren nach Anspruch 1 , **dadurch gekennzeichnet, dass** die übereinander gestapelten Vorformlinge mit einem Druck im Bereich von 1 bis 50 MPa zusammengepresst werden.

3. Verfahren nach einem der vorigen Ansprüche, **dadurch gekennzeichnet, dass** die Dicke der Vorformlinge mindestens 4 mm und höchstens 45 mm beträgt.

4. Verfahren nach einem der vorigen Ansprüche, **dadurch gekennzeichnet, dass** die Dichte des Graphitexpandats, aus dem die Vorformlinge hergestellt werden, 3 bis 15 g/l beträgt.

5. Verfahren nach einem der vorhergehenden Ansprüche, **dadurch gekennzeichnet, dass** die Dichte des Graphits in den Vorformlingen 0,02 bis 0,1 g/l beträgt.

6. Verfahren nach einem der vorhergehenden Ansprüche, **dadurch gekennzeichnet, dass** die Dichte des Graphits in den Formkörpern 0,03 bis 0,25 g/l beträgt.

7. Verfahren nach einem der vorhergehenden Ansprüche, **dadurch gekennzeichnet, dass** die Dicke des Formkörpers in Pressrichtung mindestens 50 mm beträgt.

8. Verfahren nach einem der vorhergehenden Ansprüche, **dadurch gekennzeichnet, dass** das Graphitexpandat faser- oder partikelförmige Zusätze aus Metall, Kohlenstoff, keramischen oder mineralischen Materialien enthält.

9. Verfahren nach Anspruch 8, **dadurch gekennzeichnet, dass** dem Graphitexpandat Partikel eines Wärme speichernden Materials zugesetzt sind.

10. Verfahren nach einem der vorigen Ansprüche, **dadurch gekennzeichnet, dass** die Oberflächen einzelner oder aller Vorformlinge partiell mit einer Beschichtung, einem Überzug, einer Belegung oder einer Auflage versehen sind, so dass jede Grenzfläche zwischen den Vorformlingen zu höchstens 50 % von der Beschichtung, dem Überzug, der Belegung oder der Auflage bedeckt ist.

11. Verfahren nach Anspruch 10, **dadurch gekennzeichnet, dass** die im Stapel nach oben weisenden Oberflächen einzelner oder aller Vorformlinge mit einem Pulver oder Granulat bedeckt sind, wobei die Pulver- bzw. Granulatpartikel maximal 50 % der nach oben weisenden Oberfläche des Vorformlings bedecken.

12. Verfahren nach Anspruch 11, **dadurch gekennzeichnet, dass** die im Stapel nach oben weisenden Oberflächen einzelner oder aller Vorformlinge mit einem pulver- oder granulatförmigen Wärme speichernden Material bedeckt sind, wobei die Pulver- bzw. Granulatpartikel maximal 50 % der nach oben weisenden Oberfläche des Vorformlings bedecken.

13. Verfahren nach Anspruch 11, **dadurch gekennzeichnet, dass** in die im Stapel nach oben weisenden Oberflächen einzelner oder aller Vorformlinge Vertiefungen eingelassen sind, in welche das pulver- oder granulatförmige Material eingebracht wird, wobei die Pulver- bzw. Granulatpartikel maximal 50 % der nach oben weisenden Oberfläche des Vorformlings bedecken.

14. Verfahren nach Anspruch 10, **dadurch gekennzeichnet, dass** die Oberflächen einzelner oder aller Vorformlinge mit einem flächigen textilen Material, einem Lochblech oder einer gelochten Folie belegt werden, so dass jede Grenzfläche zwischen den Vorformlingen zu höchstens 50 % mit dem textilen Material bedeckt ist.

15. Verfahren nach Anspruch 10, **dadurch gekennzeichnet, dass** das textile Material ein Gewebe mit einer Maschenweite zwischen 3 mm x 3 mm und 20 mm x 20 mm ist.

16. Verfahren nach einem der Ansprüche 10 bis 15, **dadurch gekennzeichnet, dass** die Beschichtung, der Überzug, der Belag oder die Auflage schmelzbare oder thermoplastische Bestandteile enthält und dass der Vorgang des Verbindens der Vorformlinge unter Druck bei oder oberhalb der Erweichungs- bzw. Schmelztemperatur dieser Substanz erfolgt.

17. Verfahren nach einem der vorhergehenden Ansprüche, **dadurch gekennzeichnet, dass** sich die übereinander gestapelten Halbzeuge in ihrer Dichte oder/und Dicke oder/und Zusammensetzung oder/und Beschichtung voneinander unterscheiden.

18. Verfahren nach einem der vorhergehenden Ansprüche, **dadurch gekennzeichnet, dass** alternierend Vorformlinge aus Graphitexpandat und Auflagen aus flächigen textilen Materialien, Lochblech oder Lochfolie übereinander gestapelt, wobei jede Grenzfläche zwischen den Vorformlingen zu höchstens 50 % von der Beschichtung, dem Überzug, der Belegung oder der Auflage bedeckt ist, und anschließend durch Einwirkung von Druck zu einem einstückigen Formkörper verbunden werden.

19. Verfahren nach einem der vorigen Ansprüche, **dadurch gekennzeichnet, dass** einige der übereinander gestapelten Vorformlinge eine Imprägnierung aufweisen.

20. Verfahren nach Anspruch 19, **dadurch gekennzeichnet, dass** einige der übereinander gestapelten Vorformlinge mit Furanharz imprägniert sind.

21. Verfahren nach Anspruch 19, **dadurch gekennzeichnet, dass** einige der Vorformlinge mit einem Wärme speichernden Material imprägniert sind.

22. Verfahren nach einem der vorhergehenden Ansprüche, **dadurch gekennzeichnet, dass** das Verbinden der Vorformlinge unter Druck in einer Plattenpresse, in einem entlüftbaren Presswerkzeug oder zwischen Walzenpaaren geschieht.

23. Verfahren nach einem der vorhergehenden Ansprüche, **dadurch gekennzeichnet, dass** der durch das Verbinden der Vorformlinge unter Druckeinwirkung erhaltene Formkörper anschließend durch mechanische Bearbeitung in die gewünschte Endform gebracht wird.

24. Verfahren nach einem der vorigen Ansprüche, **dadurch gekennzeichnet, dass** der durch das Verbinden der Vorformlinge unter Druckeinwirkung erhaltene Formkörper imprägniert wird.

25. Verfahren nach Anspruch 24, **dadurch gekennzeichnet, dass** der Formkörper mit einem Wärme speichernden Material imprägniert wird.

26. Verfahren nach Anspruch 25, **dadurch gekennzeichnet, dass** der Formkörper mit einem als Phasenwechselmaterial wirkenden Paraffin imprägniert wird.

27. Verfahren nach einem der vorigen Ansprüche, **dadurch gekennzeichnet, dass** die Oberflächen des Formkörpers mit einer Lackierung oder mit einer Kaschierung aus einem flächigen textilen Material beschichtet werden.

28. Verwendung der nach dem Verfahren der Ansprüche 1 bis 26 hergestellten Formkörper zur Leitung oder zum Austausch von Wärme.

29. Verwendung der nach dem Verfahren nach Anspruch 9, 12, 21, 25 oder 26 hergestellten Formkörper zur Speicherung von Wärme.

30. Verfahren zur Herstellung eines Wärmespeicher, umfassend die folgenden Schritte
- Herstellung flächiger Vorformlinge mit einer Dicke von 10 bis 20 mm und einer Dichte von 0,01 g/cm³ bis 0,2 g/cm³ aus Graphitexpandat mit einer Dichte von 2 g/l bis 20 g/l
- Beschichtung der nach oben weisenden Oberflächen der Vorformlinge mit Partikeln eines Wärme speichernden Materials, so dass die nach oben weisende Oberfläche jedes Vorformlings maximal zu 50 % mit dem Partikeln des Wärme speichernden Materials bedeckt ist,
- Übereinanderstapeln der Vorformlinge, so dass die beschichteten Oberflächen nach oben weisen,
- Auflegen eines unbeschichteten Vorformlings auf den Stapel
- Verbinden der Vorformlinge durch Einwirkung von Druck zu einem einstückigen Rohformkörper, wobei das Graphitexpandat auf eine Dichte von 0,025 g/cm³ bis 0,4 g/cm³ verdichtet wird
- Zuschneiden des Rohformkörpers in die Form eines Blocks.

## Claims

1. A process for the preparation of mouldings comprising compressed graphite expandate, including the steps
• preparation of planar pre-formed pieces having a density of from 0.01 g/cm³ to 0.2 g/cm³ from graphite expandate having a density of from 2 g/l to 20 g/l,
• stacking of at least two pre-formed pieces one on top of the other,
• bonding of the pre-formed pieces by the influence of pressure to give a single-piece moulding, wherein the graphite is compressed under the influence of the pressure to a density of from 0.025 g/cm³ to 0.4 g/cm³.

2. A process according to Claim 1, **characterised in that** the pre-formed pieces stacked one on top of the other are pressed together at a pressure within the range 1 to 50 MPa.

3. A process according to one of the preceding claims, **characterised in that** the thickness of the pre-formed pieces is at least 4 mm and at most 45 mm.

4. A process according to one of the preceding claims, **characterised in that** the density of the graphite expandate from which the pre-formed pieces are prepared is from 3 to 15 g/l.

5. A process according to one of the preceding claims, **characterised in that** the density of the graphite in the pre-formed pieces is from 0.02 to 0.1 g/l.

6. A process according to one of the preceding claims, **characterised in that** the density of the graphite in the mouldings is from 0.03 to 0.25 g/l.

7. A process according to one of the preceding claims, **characterised in that** the thickness of the moulding in the direction of pressing is at least 50 mm.

8. A process according to one of the preceding claims, **characterised in that** the graphite expandate contains fibrous or particulate additives comprising metal, carbon, ceramic materials or mineral materials.

9. A process according to Claim 8, **characterised in that** particles of a heat-storing material are added to the graphite expandate.

10. A process according to one of the preceding claims, **characterised in that** the surfaces of individual pre-formed pieces or of all the pre-formed pieces are provided in partial manner with a coating, a cover, a deposit or an overlay, so that a maximum of 50 % of each interface between the pre-formed pieces is covered by the coating, cover, deposit or overlay.

11. A process according to Claim 10, **characterised in that** the upward-facing surfaces of individual pre-formed pieces or of all the pre-formed pieces in the stack are covered with a powder or granules, wherein the powder particles or granule particles cover a maximum of 50 % of the upward-facing surface of the pre-formed piece.

12. A process according to Claim 11, **characterised in that** the upward-facing surfaces of individual pre-formed pieces or of all the pre-formed pieces in the stack are covered with a pulverulent or granular heat-storing material, wherein the powder particles or granule particles cover a maximum of 50 % of the upward-facing surface of the pre-formed piece.

13. A process according to Claim 11, **characterised in that** indentations are let into the upward-facing surfaces of individual pre-formed pieces or of all the pre-formed pieces in the stack, into which indentations the pulverulent or granular material is introduced, wherein the powder particles or granule particles cover a maximum of 50 % of the upward-facing surface of the pre-formed piece.

14. A process according to Claim 10, **characterised in that** the surfaces of individual pre-formed pieces or of all the pre-formed pieces are overlaid with a planar textile material, a perforated plate or a punched sheeting, so that a maximum of 50 % of each interface between the pre-formed pieces is covered with the textile material.

15. A process according to Claim 10, **characterised in that** the textile material is a woven having a mesh size of between 3 mm x 3 mm and 20 mm x 20 mm.

16. A process according to one of Claims 10 to 15, **characterised in that** the coating, cover, deposit or overlay contains fusible or thermoplastic constituents and that the operation of bonding the pre-formed pieces takes place under pressure at or above the softening or melting point of this substance.

17. A process according to one of the preceding claims, **characterised in that** the semi-finished products stacked one on top of the other differ from one another in their density and/or thickness and/or composition and/or coating.

18. A process according to one of the preceding claims, **characterised in that** in alternating manner pre-formed pieces of graphite expandate and overlays of planar textile materials, perforated plate or punched sheeting are stacked one on top of the other, wherein a maximum of 50 % of each interface between the pre-formed pieces is covered by the coating, cover, deposit or overlay, and are then bonded by the influence of pressure to give a single-piece moulding.

19. A process according to one of the preceding claims, **characterised in that** some of the pre-formed pieces stacked one on top of the other have an impregnation.

20. A process according to Claim 19, **characterised in that** some of the pre-formed pieces stacked one on top of the other are impregnated with furan resin.

21. A process according to Claim 19, **characterised in that** some of the pre-formed pieces are impregnated with a heat-storing material.

22. A process according to one of the preceding claims, **characterised in that** the bonding of the pre-formed pieces under pressure takes place in a platen press, in a ventilatable pressing tool or between pairs of rollers.

23. A process according to one of the preceding claims, **characterised in that** the moulding obtained by the bonding of the pre-formed pieces under the influence of pressure is then brought to the desired final form by mechanical processing.

24. A process according to one of the preceding claims, **characterised in that** the moulding obtained by the bonding of the pre-formed pieces under the influence of pressure is impregnated.

25. A process according to Claim 24, **characterised in that** the moulding is impregnated with a heat-storing material.

26. A process according to Claim 25, **characterised in that** the moulding is impregnated with a paraffin which acts as a phase change material.

27. A process according to one of the preceding claims, **characterised in that** the surfaces of the moulding are coated with a finish or with a lamination comprising a planar textile material.

28. Use of the mouldings prepared by the process according to Claims 1 to 26 for the conduction or the exchange of heat.

29. Use of the mouldings prepared by the process according to Claims 9, 12, 21, 25 or 26 for the storage of heat.

30. A process for the preparation of a heat storage means, including the following steps:
- preparation of planar pre-formed pieces having a thickness of from 10 to 20 mm and a density of from 0.01 g/cm³ to 0.2 g/cm³ from graphite expandate having a density of from 2 g/l to 20 g/l,
- coating of the upward-facing surfaces of the pre-formed pieces with particles of a heat-storing material, so that a maximum of 50 % of the upward-facing surface of each pre-formed piece is covered with the particles of the heat-storing material,
- stacking of the pre-formed pieces one on top of the other, so that the coated surfaces face upward,
- laying of an uncoated pre-formed piece onto the stack,
- bonding of the pre-formed pieces by the influence of pressure to give a single-piece raw moulding, wherein the graphite expandate is compressed to a density of from 0.025 g/cm³ to 0.4 g/cm³,
- cutting of the raw moulding to the shape of a block.

## Revendications

1. Procédé de fabrication de pièces moulées en graphite expansé compressé, comprenant les étapes consistant à :
- fabriquer des ébauches plates d'une densité allant de 0,01 g/cm³ à 0,2 g/cm³ à partir de graphite expansé d'une densité allant de 2 g/l à 20 g/l,
- empiler au moins deux ébauches l'une sur l'autre,
- solidariser les ébauches sous l'effet de la pression pour former une pièce moulée unitaire, sachant que la pression a pour effet de compresser le graphite à une densité allant de 0,025 g/cm³ à 0,4 g/cm³.

2. Procédé selon la revendication 1,
**caractérisé en ce qu'**
on comprime les ébauches empilées les unes sur les autres à une pression comprise dans la plage allant de 1 à 50 MPa.

3. Procédé selon l'une des revendications précédentes,
**caractérisé en ce que**
l'épaisseur des ébauches est d'au moins 4 mm et d'au plus 45 mm.

4. Procédé selon l'une des revendications précédentes,
**caractérisé en ce que**
la densité du graphite expansé à partir duquel les ébauches sont fabriquées va de 3 à 15 g/l.

5. Procédé selon l'une des revendications précédentes,
**caractérisé en ce que**
la densité du graphite dans les ébauches est de 0,02 à 0,1 g/l.

6. Procédé selon l'une des revendications précédentes,
**caractérisé en ce que**
la densité du graphite dans les pièces moulées est de 0,03 à 0,25 g/l.

7. Procédé selon l'une des revendications précédentes,
**caractérisé en ce que**
l'épaisseur de la pièce moulée est d'au moins 50 mm dans la direction de pression.

8. Procédé selon l'une des revendications précédentes,
**caractérisé en ce que**
le graphite expansé contient des additifs fibreux ou particulaires à base de métal, de carbone, de matériaux céramiques ou minéraux.

9. Procédé selon la revendication 8,
**caractérisé en ce que**
de chaleur on ajoute au graphite expansé des particules de matériau accumulateur.

10. Procédé selon l'une des revendications précédentes,
**caractérisé en ce que**
les surfaces d'une seule ou de toutes les ébauches sont partiellement pourvues d'un revêtement, d'une enduction, d'un dépôt ou d'un placage de sorte que chaque interface entre les ébauches soit recouverte jusqu'à 50 % maximum par le revêtement, l'enduction, le dépôt ou le placage.

11. Procédé selon la revendication 10,
**caractérisé en ce que**
les surfaces tournées vers le haut d'une ou de toutes les ébauches empilées sont recouvertes d'une poudre ou d'un granulat dont les particules recouvrent au maximum 50 % de la surface d'ébauche tournée vers le haut.

12. Procédé selon la revendication 11,
**caractérisé en ce que**
les surfaces tournées vers le haut d'une ou de toutes les ébauches empilées sont recouvertes d'un matériau accumulateur de chaleur pulvérulent ou granuleux dont les particules recouvrent au maximum 50 % de la surface d'ébauche tournée vers le haut.

13. Procédé selon la revendication 11,
**caractérisé en ce que**
on réalise, dans les surfaces tournées vers le haut d'une ou de toutes les ébauches empilées, des creux pour recevoir le matériau pulvérulent ou granuleux dont les particules recouvrent au maximum 50 % de la surface d'ébauche tournée vers le haut.

14. Procédé selon la revendication 10,
**caractérisé en ce que**
les surfaces d'une ou de toutes les ébauches sont recouvertes d'un matériau textile plan, d'une tôle perforée ou d'une feuille perforée de sorte que chaque interface entre les ébauches soit recouverte jusqu'à 50 % maximum du matériau textile.

15. Procédé selon la revendication 10,
**caractérisé en ce que**
le matériau textile est un tissu dont la largeur de maille est comprise entre 3 mm x 3 mm et 20 mm x 20 mm.

16. Procédé selon l'une des revendications 10 à 15,
**caractérisé en ce que**
le revêtement, l'enduction, le dépôt ou le placage contiennent des composants fusibles ou thermoplastiques, et le processus de solidarisation des ébauches s'effectue sous pression, au moins à la température de ramollissement ou de fusion de cette substance.

17. Procédé selon l'une des revendications précédentes,
**caractérisé en ce que**
les demi-produits empilés les uns sur les autres différent entre eux de par leur densité ou/et épaisseur ou/et composition ou/et revêtement.

18. Procédé selon l'une des revendications précédentes,
**caractérisé en ce que**
des ébauches en graphite expansé et des placages de matériaux textiles plans, de tôle perforée ou de feuille perforée sont empilés de façon alternée les uns sur les autres, et chaque interface entre les ébauches est recouverte jusqu'à 50 % maximum par le revêtement, l'enduction, le dépôt ou le placage, puis les ébauches sont solidarisées sous l'effet de la pression pour former une pièce moulée unitaire.

19. Procédé selon l'une des revendications précédentes,
**caractérisé en ce que**
certaines des ébauches empilées les unes sur les autres présentent une imprégnation.

20. Procédé selon la revendication 19,
**caractérisé en ce que**
certaines des ébauches empilées les unes sur les autres sont imprégnées de résine de furane.

21. Procédé selon la revendication 19,
**caractérisé en ce que**
certaines des ébauches sont imprégnées d'un matériau accumulateur de chaleur.

22. Procédé selon l'une des revendications précédentes,
**caractérisé en ce que**
la solidarisation des ébauches s'effectue sous pression dans une presse à plateaux, dans un outil de compression purgeable ou entre des paires de rouleaux.

23. Procédé selon l'une des revendications précédentes,
**caractérisé en ce que**
la pièce moulée obtenue par solidarisation des ébauches sous l'effet de la pression est ensuite façonnée à la forme finale voulue par usinage mécanique.

24. Procédé selon l'une des revendications précédentes,
**caractérisé en ce que**
la pièce moulée obtenue par solidarisation des ébauches sous l'effet de la pression reçoit une imprégnation.

25. Procédé selon la revendication 24,
**caractérisé en ce que**
la pièce moulée est imprégnée d'un matériau accumulateur de chaleur.

26. Procédé selon la revendication 25,
**caractérisé en ce que**
la pièce moulée est imprégnée d'une paraffine agissant comme un matériau à changement de phase.

27. Procédé selon l'une des revendications précédentes,
**caractérisé en ce que**
les surfaces de la pièce moulée sont revêtues d'une couche de peinture ou d'une stratification de matériau textile plan.

28. Utilisation de la pièce moulée fabriquée selon le procédé des revendications 1 à 26, pour la conduction ou l'échange de chaleur.

29. Utilisation de la pièce moulée fabriquée selon le procédé de la revendication 9, 12, 21, 25 ou 26 pour accumuler de la chaleur.

30. Procédé de fabrication d'un accumulateur de chaleur, comprenant les étapes suivantes consistant à
- fabriquer des ébauches plates d'une épaisseur allant de 10 à 20 mm et d'une densité allant de 0,01 g/cm³ à 0,2 g/cm³ à partir de graphite expansé d'une densité allant de 2 g/l à 20 g/l,
- revêtir les surfaces des ébauches tournées vers le haut avec des particules de matériau accumulateur de chaleur, de sorte que la surface de chaque ébauche tournée vers le haut soit recouverte jusqu'à 50 % maximum par les particules de matériau accumulateur de chaleur,
- empiler les ébauches les unes sur les autres de sorte que les surfaces revêtues soient tournées vers le haut,
- déposer sur l'empilement une ébauche non revêtue,
- solidariser les ébauches sous l'effet de la pression pour former une pièce moulée brute unitaire, sachant que le graphite expansé est comprimé à une densité allant de 0,025 g/cm³ à 0,4 g/cm³, et
- découper la pièce moulée brute en forme de bloc.
